# EUROPEAN PATENT SPECIFICATION

(11) **EP 0 741 277 B1**
(45) Date of publication and mention of the grant of the patent: **30.01.2002**
(21) Application number: 96830236.4
(22) Date of filing: 29.04.1996
(51) Int. Cl.: G01C 9/26, G01C 9/28

(54) **Prismatic base level for building application**
Waage mit prismatischer Grundplatte für Bauzwecke
Dispositif de nivellement avec base prismatique pour la construction

(30) Priority: 04.05.1995 IT MI950895
(43) Date of publication of application: 06.11.1996
(73) Proprietor: METRICA S.p.A., 20097 San Donato Milanese (Milano) (IT)
(72) Inventor: Doriguzzi Bozzo, Mario, 20097 - San Donato Milanese (Milano) (IT)
(74) Representative: Cicogna, Franco

(56) References cited:
- AU-B- 494 410
- CH-A- 345 468
- DE-U- 8 912 998
- FR-A- 1 112 443
- FR-A- 1 174 836
- FR-A- 2 449 868
- GB-A- 1 072 085
- US-A- 4 292 741

## Description

### BACKGROUND OF THE INVENTION

The present invention relates to a prismatic base level for building application.

As known, for making building spirit levels, is conventionally used an aluminium extruded section member, of rectangular cross section, having a thickness usually from 1.5 mm to 2 mm.

This section member has the combined advantages of small weight, facility of making, stiffness and good straightness, due to the extruding process.

Moreover, the use of the mentioned section member provides a very big advantage from the economic standpoint, due both to the low cost of the starting material, and to the low making costs of the finished level; in fact this material requires few limited machining operations (cutting, shearing or milling operations), and the assembling of the level pieces and the adjustment thereof are facilitated owing to an easy connection or coupling of the spirit vessel in the hollow part of the rectangular cross section element.

In order to improve the twist strength of the level body, it is possible to increase the section member thickness, or provide it with small longitudinally extending ribs.

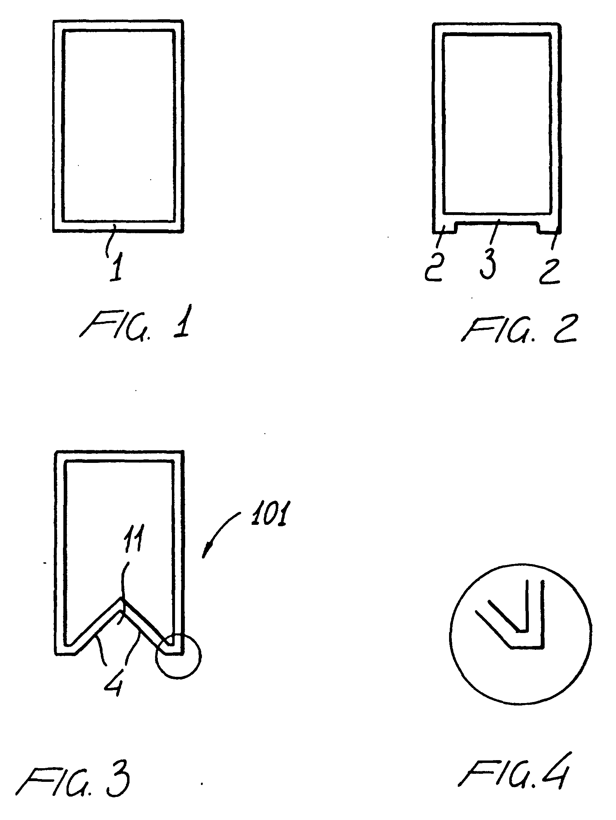

In some extruded spirit levels of the above disclosed type, the measurement (or bearing) flat member is a fully flat member, as shown in figure 1, or it is constituted by two parallel flat guides which slightly project from a connecting flat member, as is shown in figure 2.

In both the above mentioned solutions, the bearing flat member surface of the level does not allow to easily measure curved or bent surfaces (as the side surface of a cylinder), or corners or very thin wall or side surfaces, such as, for example, the edge portion of flat metal sheet elements.

The document AU 494 410 discloses a level for building application according to the preamble of claim 1.

### SUMMARY OF THE INVENTION

Accordingly, the aim of the present invention is to provide a level, having an extruded aluminium hollow cross section closed profile suitable to easily and accurately measure, in building applications, a lot of surfaces, included curved or bent surfaces, corners and small thickness plates.

Within the scope of the above mentioned aim, a main object of the present invention is to provide such a level which can be made at a very reduced cost, and may be provided with glass vials, protected by a clear plastic material casing and resisting against impact, the casing do not contacting the vial, and which are more sensitive from the measurement standpoint than those of the conventional acrylic material vials which are at present used.

According to one aspect of the present invention, the above mentioned aim and objects, as well as yet other objects, which will become more apparent hereinafter, are achieved by a level for building application, according to claim 1.

### BRIEF DESCRIPTION OF THE DRAWINGS

Further characteristics and advantages of the invention will become more apparent from the following detailed disclosure of a preferred, though not exclusive, embodiment of a level for building applications, which is illustrated, by way of an indicative, but not limitative, example, in the figures of the accompanying drawings, where:
Figure 1 is a schematic cross-sectional view of a conventional type of spirit level;
Figure 2 is another schematic cross-sectional view of a second type of conventional level;
Figure 3 is a schematic cross-sectional view illustrating a level according to the present invention;
Figure 4 is an enlarged cross-sectional view illustrating a detail of the level shown in figure 3;
Figure 5 is a schematic cross-sectional view illustrating another possible embodiment of the level according to the present invention;
Figures 6 and 7 are enlarged cross-sectional views illustrating two details of the level shown in figure 5;
Figure 8 is a view of the subject level during the use thereof;
Figure 9 is a schematic cross-sectional view illustrating a level according to a further embodiment of the invention;
Figure 10 is a schematic cross-sectional view illustrating the glass vial of the level according to the present invention, protected by a protective casing, without any continuous contact between the vial and casing;
Figure 11 is an enlarged cross-sectional view of a detail of a mounting supporting element of the vial;
Figure 12 is a detailed top cross-sectional view illustrating the vial of the subject level;
Figure 13 is a side view of the vial;
Figure 14 is a top plan view illustrating the vial with the air bubble' arranged at a central position;
Figures 15 to 18 are top plan views of the vials of figure 14, in different use conditions; and
Figure 19 is a further schematic view illustrating the level according to a further aspect of the present invention.

### DESCRIPTION OF THE PREFERRED EMBODIMENTS

With reference to the number references of the above mentioned figures, the level according to the invention, which has been indicated by the reference number 101, comprises a level body, formed by an aluminium extruded section member, of hollow and closed cross section, having a contoured base or bottom provided with a V-shape notch 11 arranged at the center of said base, and formed by flat members 4 which are mutually slanted and form an included angle of preferably 90°.

Owing to the above disclosed contour, there are obtained several advantages, such as, for example:
a) a reduction of the contact surface with the body to be controlled, thereby providing more accurate measurements;
b) a possibility of providing small bumps on the surface to be controlled, by arranging the level so as to locate the bumps in the V-shape notch of the level bottom;
c) a possibility of controlling either horizontal or vertical corner, by fitting the V-shape notch of the level bottom on the corner;
d) a possibility of measuring curved or bent surfaces, for example of pipes, by arranging the V-shape bottom longitudinally, along said pipe or thin thickness plates.

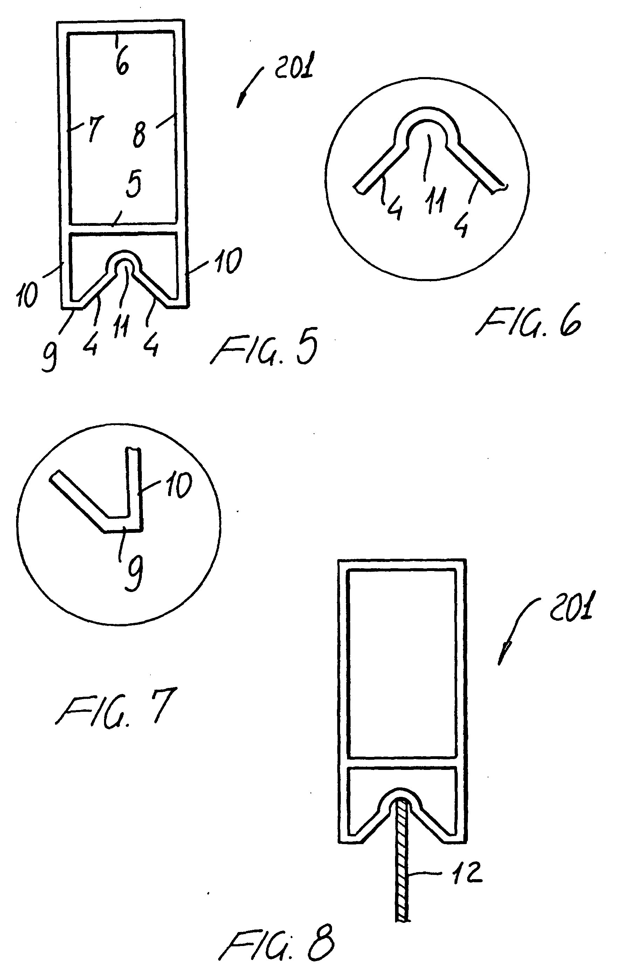

In figures 5 to 8 is shown a level 201, according to a further aspect of the present invention, which advantageously can use the vial bearing elements which are conventionally used for conventional spirit levels.

To that end, an inner reinforcement flat member 5 is provided, which is parallel to the top flat member 6, and is designed for providing an inner cross section 5, 7, 6, 8 identical to that of an existing conventional level so that the bottom portion, constituted by the inclined sides 4, the notch or cut 11 and related flat members 9, parallel to the top flat member 6, and the fitting flat members 10 for connection with the top portion, constitutes a proper addition to a section member of hollow and closed cross section of the type at present used for conventional available levels.

The two sides 4 of the notch can also be advantageously connected to the notch 11, of a width of few millimeters, in turn parallel to the plane top flat member 6.

The further advantages provided by the level 201 are the following:
a) the stiffening of the level, owing to the increased inertial moment, since the mass is more distant from the longitudinal inertial axis, since the part constituted the notch and the two slanted sides form a proper additional mass which is added to the end portion of an existing level, and this without excessively increasing the weight of the level, thereby preserving its reduced cost and facility of use;
b) the possibility of actually using the same vial bearing components or supporting elements already used in conventional rectangular cross-section levels, since, as stated, the V cross section bottom portion constitutes an additional element of a conventional level;
c) the possibility of measuring the edge portion of a small thickness flat plate, since the notch 11, connecting the two slanted sides 4, can be arranged in a bridging relationship with the flat plate 12, as is shown in figure 8.

Figure 9 illustrates a level 401, according to a further aspect of the present invention, which is very similar to the level 201, but having a much more stiffened construction, owing to the provision of one or more side ribs 13, or end ribs 14.

These ribs do not increase the weight of the construction and, moreover, can facilitate the gripping of the level.

A level having a particularly rigid construction, such that according to the present invention, may require, in order to provide a greater measurement accuracy, the use of glass vials which, with respect to the conventionally used acrylic material vials, can be made with a greater measurement sensitivity and which, moreover, are not affected by temperature variations.

In order to prevent the vial from breaking because of the weakeness of the glass material, the present invention provides to use a clear plastic material tubular element 16, made, for example, of a clear acrylic material or a clear ABS® (acryl-butadiene-styrene) material, provided for containing therein, with a not contact relationship, for example spaced at about 0.5 mm, the vials 18, supported on two ring elements 17, preferably of a metal material, and fitted to the end portions of the vial.

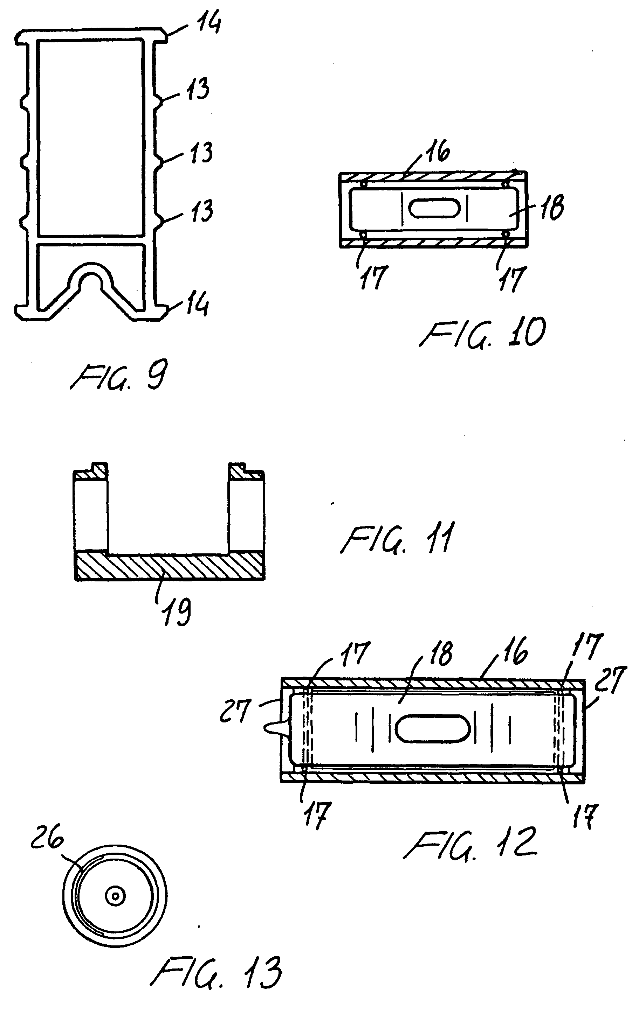

In order to allow the air bubble to be clearly seen, it is advantageously possible to introduce, into the gap between the glass vial and the plastic tubular element, a half cylindric element 26, of coloured paper, or of any other thin and flexible materials, shown in figure 13, or it is possible to colour the outside of the bottom half cylinder of the glass vial.

Moreover, it is advantageous to seal the end portions of the tubular elements by a silicone material 27 or any other like sealing material, in order to prevent extraneous matters from entering the level (such as powder or moisture) as is shown in figure 12.

The assembly constituted by the tubular element 16, the ring elements 17 and vial 18 is engaged in a metal support element, or any other element made of a very rigid material, indicated by the reference number 19 (shown in figure 11), in turn mounted on the level through any known mounting system, such as, for example, an underlaying supporting element or by a supporting element fitted on the extruded section member.

The use of clear plastic material tubular element for protecting level glass vials is already known in the prior art: however, in these prior art levels, the tubular elements were fitted in a full contact relationship with the level vials.

This contact relationship, on the other hand, has the drawback that possible pressures are transmitted to the glass vial which is a very weak element: these pressures, even if of a very small value, due to an accidental contact, even of a finger only, would involved measurement errors; moreover, such a construction would subject directly the vial to the thermal deformations of the protecting tubular element.

The present invention, on the contrary, provides to detach, to make it independent, the glass vial from its protecting casing, by applying two ring elements, preferably of a metal material, arranged at the end portions of the glass vial, thereon is fitted the clear protecting tubular element.

Thus, the glass vial will not be affected by possible accidental contacts with the outer protecting tubular elements, thereby providing a vial support-vial-protecting tubular element assembly which will provide a very good protection even for levels provided for building applications.

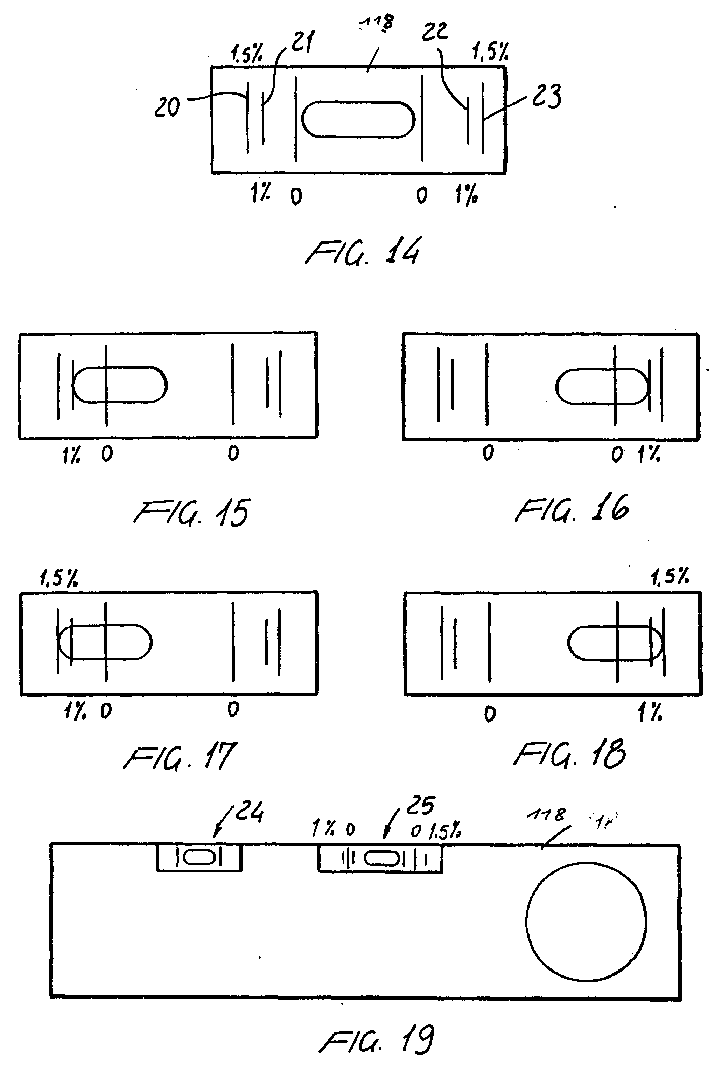

As is shown in figure 14, a further aspect of the present invention is that of providing the horizontal vial 118 with two or more additional notches, suitably spaced from one another, so that each notch corresponds to a set inclination of the level.

In addition to the notches indicated by the 0 (zero), corresponding to the horizontal position, it is possible to advantageously provide one or more notches 20, 21, 22, 23 indicating the inclination in degrees or in % of the level, in the two directions, as the air bubble contacts the respective notch.

For example, in figure 14 it is possible to see a bubble vial in a horizontal position, that is with the air bubble at the zero position.

In figure 15 the vial is inclined with its right side downwardly for a value corresponding to 1%; in figure 17 this inclination has a value of 1.5%; and figures 16 and 18 illustrates the vial with the right side raised, respectively with an inclination of 1% and 1.5%; in this connection it should be apparent that other indications, for other inclinations, would be possible.

Thus, the level can directly indicate one or more inclinations, as those which are frequently used in the building field for laying pipes or, more simply, for facilitating the water flow through outer floors.

Since, moreover, inclinations of the order of 1%, 2% or 3% would involve very great displacements of the air bubble of conventional building levels, the present invention provides, in a same level, to use two horizontal vials of very different measurement sensitivity.

Figure 19 schematically illustrates a level 218 provided with a very sensitive vial 24 for the fine adjustment, and with a less sensitivity vial 25 provided with notches for directly indicating the inclination, in the above disclosed manner, or for a quick and coarse locating as that required in some conditions.

Of course the used materials, as well as the contingent size, can be any, depending on the requirements and on the status of the art.

## Claims

1. A level for building application, made of a section member having a closed cross profile, comprising a top flat member (6), two flat side members (7, 8, 10) perpendicular to said top flat member (6), a bottom base constituted by two short flat members (9) parallel to the top flat member (6) and perpendicular to the flat side members (7, 8, 10), coupled to one another by V-slanted flat members (4) with the connection extending parallel to said flat members (9), **characterized in that** said closed cross profile section member is an aluminium hollow section member, and **in that** said flat side members (10) are connected inside by a reinforcement flat member (5), parallel to said top flat member (6).

2. A level according to claim 1, wherein the V-slanted flat members are connected by a recess (11) shaped as a semicircular tube.

3. A level according to claim 1, wherein said V-slanted flat members (4) are so arranged to form an included angle of 90°.

4. A level according to claim 1, wherein said level is provided with one or more side or end stiffening ribs (13, 14).

5. A level according to claim 1, wherein said level comprises a glass vial (18) of high measurement sensitivity, protected by a clear plastic material tubular element (16) supported on ring elements (17) fitted at the end portions of the glass vial (18, 118).

6. A level according to claim 5, wherein said ring elements (17) are made of a metal material.

7. A level according to claim 5, wherein said vial (118) is provided with at least two additional notches, with respect to the 0°, said at lest two additional notches being so arranged as to correspond to a set inclination of said vial and consequently of said level.

8. A level according to claim 1, wherein said level comprises at least two horizontal vials (118), of different measurement sensitivities, wherein the first vial, of less sensitivity, is provided with at least two additional notches (20, 21, 22, 23), with respect to the 0° notch, for providing an indication, in degrees or in %, of the inclination of the level, whereas the second vial, of greater sensitivity, allows a fine adjustment of said level, in a horizontal position.

## Patentansprüche

1. Waage für Bauzwecke, die aus einem Abschnittsteil mit einer geschlossenen Querschnittskontur hergestellt ist, mit einem flachen Oberteil (6), zwei flachen Seitenteilen (7,8,10), die rechtwinklig zu dem flachen Oberteil (6) angeordnet sind, einer unteren Basis, die aus zwei parallel zu dem flachen Oberteil (6) angeordneten, kurzen, flachen Teilen (9) besteht, die rechtwinklig zu den flachen Seitenteilen (7,8,10) angeordnet und mittels V-förmig geneigter, flacher Teile (4) miteinander verbunden sind, wobei sich die Verbindung parallel zu den flachen Teilen (9) erstreckt,
**dadurch gekennzeichnet, daß**
das Abschnittsteil mit einer geschlossenen Querschnittskontur ein hohles Aluminium-Abschnittsteil ist, und die flachen Seitenteile (10) innen durch ein parallel zu dem flachen Oberteil (6) angeordnetes, flaches Verstärkungsteil (5) verbunden sind.

2. Waage nach Anspruch 1,
**dadurch gekennzeichnet, daß**
die V-förmig geneigten, flachen Teile mittels einer in Form eines halbkreisförmigen Rohres ausgebildeten Aussparung (11) verbunden sind.

3. Waage nach Anspruch 1,
**dadurch gekennzeichnet, daß**
die V-förmig geneigten, flachen Teile (4) so angeordnet sind, daß sie einen eingeschlossenen Winkel von 90° bilden.

4. Waage nach Anspruch 1,
**dadurch gekennzeichnet, daß**
die Waage mit einer oder mehreren Seiten- oder Endversteifungsrippen (13,14) versehen ist.

5. Waage nach Anspruch 1,
**dadurch gekennzeichnet, daß**
die Waage ein Glasampulle (18) mit hoher Meßempfindlichkeit aufweist, die durch ein rohrförmiges Element (16) aus durchsichtigem Kunststoffmaterial geschützt ist, das auf an den Endabschnitten der Glasampulle (18,118) angepaßten Ringelementen (17) gelagert ist.

6. Waage nach Anspruch 5,
**dadurch gekennzeichnet, daß**
die Ringelemente (17) aus einem Metallmaterial hergestellt sind.

7. Waage nach Anspruch 5,
**dadurch gekennzeichnet, daß**
die Glasampulle (118) mit mindestens zwei zusätzlichen Kerben im Verhältnis zur 0°-Kerbe versehen ist, wobei die mindestens zwei zusätzlichen Kerben so angeordnet sind, daß sie einer eingestellten Neigung der Ampulle und folglich derjenigen der Waage entsprechen.

8. Waage nach Anspruch 1,
**dadurch gekennzeichnet, daß**
die Waage mindestens zwei horizontale Ampullen (118) unterschiedlicher Meßempfindlichkeiten aufweist, wobei die erste, weniger meßempfindliche Ampulle mit mindestens zwei zusätzlichen Kerben (20,21,22,23) im Verhältnis zur 0°-Kerbe versehen ist, um eine Anzeige der Neigung der Waage in Grad oder in % bereitzustellen, während die zweite, meßempfindlichere Ampulle eine Feineinstellung der Waage in einer horizontalen Position ermöglicht.

## Revendications

1. Dispositif de nivellement pour la construction, fabriqué à partir d'un membre de section présentant un profil transversal fermé, comprenant un membre plat de sommet (6), deux membres plats de côtés (7, 8, 10) perpendiculaires audit membre plat de sommet (6), une base de fond constituée par deux petits membres plats (9) parallèles au membre plat de sommet (6) et perpendiculaires au membres plats de côtés (7, 8, 10), couplés à d'autres membres plats inclinés en forme de V (4) avec la connexion s'étendant parallèlement audits membres plats (9), **caractérisé en ce que** le membre de section présentant un profil transversal fermé est un membre de section creux en aluminium, et **en ce que** lesdits membres plats de côtés (10) sont connectés à l'intérieur par un membre plat de renfort (5), parallèle audit membre plat de sommet (6).

2. Dispositif de nivellement selon la revendication 1, dans lequel les membres plats inclinés en forme de V sont connectés par une encoche (11) en forme de tube semi-circulaire.

3. Dispositif de nivellement selon la revendication 1, dans lequel lesdits membres plats inclinés en forme de V (4) sont disposés de telle manière qu'ils forment un angle inscrit de 90°C.

4. Dispositif de nivellement selon la revendication 1, dans lequel ledit dispositif de nivellement est muni d'un ou plusieurs côtés ou de nervures de renforcement d'extrémités (13, 14).

5. Dispositif de nivellement selon la revendication 1, dans lequel ledit dispositif de nivellement comprend un flacon de verre (18) à haute sensibilité de mesure, protégé par un élément tubulaire en matériau de plastique transparent (16) supporté par les éléments de type anneau (17) posés sur les parties d'extrémités du flacon de verre (18, 118).

6. Dispositif de nivellement selon la revendication 5, dans lequel lesdits éléments de type anneau (17) sont fabriqués à partir d'un matériau de métal.

7. Dispositif de nivellement selon la revendication 5, dans lequel ledit flacon (118) est muni d'au moins deux encoches additionnelles, en respectant le 0°, lesdits au moins deux encoches additionnelles étant disposées de telle manière pour correspondre à l'inclinaison dudit flacon et, par conséquence, à celle dudit dispositif de nivellement.

8. Dispositif de nivellement selon la revendication 1, dans lequel ledit dispositif de nivellement comprend au moins deux flacons horizontaux (118), de sensibilités de mesure différentes, dans lequel le premier flacon, de moindre sensibilité, est muni d'au moins deux encoches additionnelles (210, 21, 22, 23), en respectant l'encoche 0°, pour fournir une indication, en degrés ou en pourcentages, d'inclinaison du dispositif de nivellement, tandis que le second flacon, de plus grande sensibilité, permet un ajustement précis dudit dispositif de nivellement, en position horizontale.
